# EUROPEAN PATENT SPECIFICATION

(11) **EP 2 396 148 B1**
(45) Date of publication and mention of the grant of the patent: **10.04.2013**
(21) Application number: 09779040.6
(22) Date of filing: 11.02.2009
(51) Int. Cl.: B25J 9/00, B25J 9/16

(54) **DUAL ARM ROBOT**
DOPPELARMIGER ROBOTER
ROBOT À DEUX BRAS

(43) Date of publication of application: 21.12.2011
(73) Proprietor: ABB Research Ltd., 8050 Zürich (CH)
(72) Inventor: TRANGÄRD, Arne, S-723 35 Västerås (SE); KULLBORG, Camilla, S-725 91 Västerås (SE); SIRKETT, Daniel, S-722 10 Västerås (SE); ANDERSSON, Hans, S-725 91 Västerås (SE); LUNDBERG, Ivan, S-722 46 Västerås (SE); WÄPPLING, Daniel, S-724 61 Västerås (SE)
(74) Representative: Johansson Webjörn, Ingmari
(86) International application number: PCT/EP2009/051551
(87) International publication number: WO 2010/091722

(56) References cited:
- EP-A- 0 402 599
- EP-A- 1 468 791
- WO-A-2005/087451
- DE-A1- 3 932 013
- JP-A- 5 111 897
- JP-A- 8 185 218
- JP-A- 59 064 239
- JP-A- 2003 159 683
- US-A- 4 260 941
- US-A- 4 826 392
- US-A- 4 894 901

## Description

### Field of invention

The present invention in a first aspect relates to an industrial robot having two arms and in a second aspect to a method for operating such a robot.

### Background of invention

A dual arm robot is useful for assembly operation. To perform an assembly operation it is often necessary to apply a process force, so that the parts to be assembled snap into place. Assembly with a dual arm robot can be done in two different ways. The first type is when one robot arm carries the assembly and the other arm carries the component to be assembled. The second type is when a robot arm holds either the assembly or the component to be assembled and the other part is located in a stationary fixture, typically on the assembly table.

For both types of operation the maximum force that can be exerted by one arm limits what can be performed and the accuracy that can be obtained.

Examples of how the two arms of a dual arm robot co-operate can be found in JP 2003159683, JP 8185 218, US 4260 941, US 4826 392, DE 3932013, Dauchez P. et al; Task modelling and force control for a two-arm robot, Proceedings of the 1991 IEEE International Conference on Robotics and Automation, Bonitz, R.G. et. al; Robust Dual-arm Manipulation of Rigid Objects via Palm Grasping-Theory and Experiments, Proceedings of the 1996 IEEE Conference on Robotics and Automation, Jazidiec, A et. al; Multi-Point Compliance Control of Dual-Arm Robots, Proceedings of the 1992 IEEE/RSJ International Conference on Intelligent Robots and Systems, Meghadari; The Cooperative Dual-arm Cam-lock manipulators, Robotics and Automation, 1994. Proceedings of the 1994 IEEE International Conference, Kosuge, K et al; Unified Control for Dynamic Cooperative Manipulation, Proceedings of the IEEE/RSJ/GI International Conference on Munich, Germany 12-16 September and Osumi, H. et al; Cooperative Control between two Position-controlled Manipulators, Proceedings of the 1994 IEEE International Conference on San Diego, USA 8-13 May 1994.

In EP 0402599 is disclosed an industrial robot having two arms connected to a common base and which arms are arranged to have a tool/end effector mounted thereon, in accordance with the preamble of independent claim 1 and claim 12. In WO 2005/087451 is disclosed a positioning device and a method for positioning components, according to which the arms of two robots cooperate to support and position two components in relation to each other, with the help of coupling units of each robot, which coupling units may be brought into engagement with each other. In JP 59064239 is disclosed a robot arm provided with a holder, used in assembly work.

None of the prior art documents, however discloses a satisfactory solution how to in a simple way increase the available force and/or increase the relative accuracy between the arms.

The object of the present invention is to extend the operation possibilities with a dual arm robot.

### Summary of invention

The object of the invention is in the first aspect met by a robot according be claim 1.

Since the two arms in that way are pre-arranged to co-operate by abutting each other, the stability and the effective force will be increased.

When the robot operates according to the first type of operation mentioned above the maximum process force can be increased since the arms support each other. More important, however is that the accuracy will increase. The only accuracy relevant to this type of assembly process is the relative accuracy between the two arms. If the two arms abut each other the relative accuracy is related to the free arm length. By the support from the abutment means the free arm length is substantially reduced which leads to the increased accuracy.

In case of operation according to the second type mentioned above, one of the arms holds the work piece and is capable to manipulate the work piece with a certain maximum force. When this arm is supported by the contact with the other arm, the contact force from the latter via the abutment means increases the maximum force to be the sum of the maximum force from each arm. Normally this represents doubling the possible maximum force. Due to the support there will also be an increase in stability which increases the precision.

By providing an abutment means also at the second arm, the position of the contact between the two arms becomes well defined and the precision of the operation when one arm supports the other will be increased.

According to a preferred embodiment each arm includes at least, six axes, preferably at least seven axes and a corresponding number of joints, and the abutment means of each arm are located on joints which joints are located so that in total three joints can move after the abutment means.

The three joints can all be on one of the arms, or there can be one joint on one of the arms and two on the other one.

Thereby the arms support each other as close to the robot tool as possible which optimizes the force transfer from one arm to the other and results in high stability. When the robot operates according to the first type of operation the distance from the supporting area to the tools is short resulting in high accuracy.

According to a further preferred embodiment each abutment means includes two oppositely directed abutment surfaces.

This arrangement allows a freedom to use either of the arms as support for the other when operating according to the second type of operation and a greater freedom regarding the direction of the operating force.

According to a further preferred embodiment each abutment surface is planar.

This embodiment has manufacturing advantages since it is easy to provide such planar surfaces. It makes also the programming of the robot simple. The contact force will be easy to distribute over a large area and the force direction becomes distinctly defined.

Preferably each abutment surface is formed by a coating applied on a part of the arm.

The abutment surfaces thereby can be made of a material that is harder than the material of the robot arm and better withstand the contact forces.

According to a further preferred embodiment each of the first and second abutment means includes a non-planar surface, which two non-planar surfaces match each other in a male/female-relationship.

Such abutment surfaces might be more complicated to manufacture than planar surfaces but this embodiment has the advantage that the direction of the force transferred from one arm to the other can be varied. This embodiment is particular valuable when operating according to the first type of operation since the matching surfaces contributes to increase the relative accuracy between the arms.

According to a further preferred embodiment the non-planar surfaces are spherical surfaces.

With spherical surfaces the freedom to vary the direction of the supporting force will be comparatively high, and the force can easily be distributed on a relatively large area.

According to a further preferred embodiment the abutment means of at least one of the arms is arranged on a projecting part, projecting from the arm.

Thereby the arms can support each other without the need to have them close to each other. This reduces the risk for interference between the arms and widens the possibility how to perform the force transmission between the arms.

When operating according to the first type of operation, the orientation of the projection can be adapted such that it optimizes the accuracy. For achieving this it is normally preferred that both abutment means are arranged on a respective projection.

In the embodiment where there are non-planar abutment surfaces that match each other it is preferred that each arm has a male and a female abutment surface. This offers two different possibilities for the cooperation according to the first type of operation. This is particularly preferred when the non-planar surfaces are arranged on projections.

Preferably, each abutment means include both planar abutment surfaces arranged to co-operate and non-planar abutment surfaces arranged to co-operate. Since the non-planar surfaces are best suited for the mentioned first type of operation and the planar surfaces in many cases are best suited for the mentioned second type of operation, the robot thereby will be flexible and adapted to perform both kind of operation with optimized result.

According to a further preferred embodiment the robot is arranged to operate in either of two modes, namely a collaborative mode, in which the two arms jointly operate on one work-piece, and a precision assembly mode, in which the two arms operate on separate work-pieces.

The robot thereby can be easily adapted to operate with the aid of the abutment means in case an increased force is required and to operate independently with the two arms in case that is required. Thereby the robot will be well suited to perform either of the two types of operation.

According to a further preferred embodiment the robot includes soft-ware arranged to select one of said modes in response to a command and which soft-ware includes operation instructions depending on which mode that has been selected.

This embodiment contributes to further simplify operation in either of the two modes.

According to a further preferred embodiment the soft-ware in the collaborative mode includes instruction to one of the arms to abut the other arm, instruction to define one of the arms to be a master arm and the other arm to be a slave arm, instruction to the master arm to perform a certain operation and instruction to the slave arm to follow the master arm.

By arranging the software to provide these instructions the collaborative mode operation will be effectively executed.

According to a further preferred embodiment the soft-ware in the precision assembly mode includes a first set of instructions for the third arm section of one of the arms and a second set of instructions for the third section of the other arm.

By arranging the soft-ware to provide such instructions, the precision assembly mode operation will be efficiently executed with a high degree of accuracy.

In the second aspect of the invention, the object is met by a method for operating an industrial robot according to the present invention, and in particular to any of the preferred embodiments thereof.

According to a preferred embodiment of the invented method, the robot is arranged to work on either of two modes, a collaborative mode, in which the two arms jointly operate on one work-piece, and a precision assembly mode, in which the two arms operate on separate work-pieces, whereby the mode is selected before the robot starts to operate.

The invented method and the preferred embodiments thereof have corresponding advantages as those of the invented robot and the preferred embodiments thereof and which have been described above.

It is to be noted that further preferred embodiments of course can be realised by any possible combination of preferred embodiments mentioned above.

The invention will be further explained by the following detailed description of examples thereof and with reference to the accompanying drawings.

### Brief description of the drawing

Fig. 1 is a schematic illustration of a first example of a robot according to the invention.
Fig. 2 is a schematic illustration of a second example of a robot according to the invention.
Fig. 3 is a perspective view of a third example of the invention.
Fig. 4 in a perspective view illustrates a detail of fig. 3.
Fig. 5 illustrates a further example of a robot according to the invention.

### Detailed description of examples of the invention

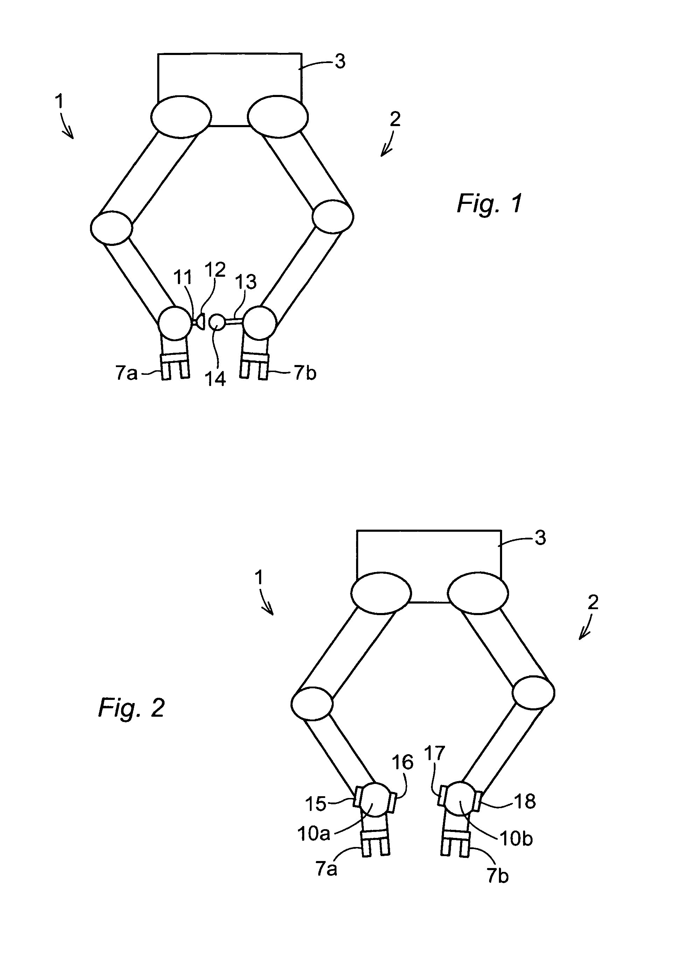

Fig. 1 schematically illustrates a dual arm industrial robot for assembly operation and having a first robot arm 1 with a first tool having grip fingers 7a and a second robot arm 2 with a second tool having grip fingers 7b, which arms are connected to a robot base 3. Each arm has seven axes.

In a first mode of operation the fingers 7a of the first arm 1 carries the assembly, and the fingers 7b of the second arm 2 carries the component to be assembled.

On an arm portion moving with the fourth axis of the first arm 1 is provided a first abutment means consisting of a projection 11, in the present example in the form of a short pin. At the outer end of the pin there is a socket 12 with a spherical concavity.

On an arm portion moving with the fifth axis of the second arm 2 is provided a second abutment means consisting of a projection 13, in the present example in the form of a pin. At the outer end of the pin there is a ball 14.

The radius of the ball 14 equals the radius of the spherical concavity of the socket 12, or might be somewhat smaller.

In operation the ball 14 and socket 12 are brought into engagement with each other forming a rigid support. When performing the precision assembling operation the length of the free arms from the support is short in comparison with the total arm length and the assembly can be made with very high stiffness and accuracy. Sufficient DOF:s are left for the interaction between the tools.

The arrangement illustrated in fig. 1 can also be used for assembly according to the mentioned second mode of operation, i.e. when one of the arms carries the component to be assembled and the other part is located in a stationary fixture.

Also when performing this mode of operation the ball 14 and socket 12 are brought into engagement with each other. Assume that the grip fingers 7a of the first arm 1 carries the component to be assembled and is arranged to press it into place in the leftward direction in the figure. The ball 14 on the second arm 2 presses against the socket 12 on the first arm 1 such that the force of the second arm 2 adds to the force of the first arm when pressing the component leftwards into its place. In this mode the robot thus can perform the operation with a force that is the sum of the individual arm forces.

Only one of the arms has to be programmed for performing the operation, whereas the other arm acts as a slave arm programmed to follow the master arm.

Figure 2 illustrates a second example of a robot according to the invention. The main structure of this robot is similar to that of the robot in fig. 1. The main difference is the arrangement of the abutment means. In this example the abutment means of the first arm 1 consists of a first planar surface 15 on a plate attached to one side of wrist joint 10a and a second planar surface 16 on a plate attached to the opposite side of the wrist joint 10a. The second arm 2 has correspondingly arranged planar surfaces 17, 18.

Although also the arrangement of the abutment means in this example can be used for either of the operation modes, it is mainly intended for the second operation mode. When the grip fingers 7a of the first arm 1 is to move the component to be assembled into place in the leftward direction, the movement is supported by the second arm 2 as its abutment surface 17 pushes on the abutment surface 16 of the first arm. With an abutment surface on both sides of each wrist joint the support is obtained also if one or both wrist joints are in a position 180° from what is illustrated.

It is, however, to be understood that it is possible to have only one abutment surface on each wrist joint. It can also suffice to have a dedicated abutment surface on only one of the wrist joints, although this leads to less accuracy.

The example illustrated in fig. 1 can be modified such that each wrist joint has one projection with a socket and one projection with a ball.

In a further alternative example each wrist joint can have a ball and/or a socket and in addition a planar abutment surface of similar kind as those of fig. 2.

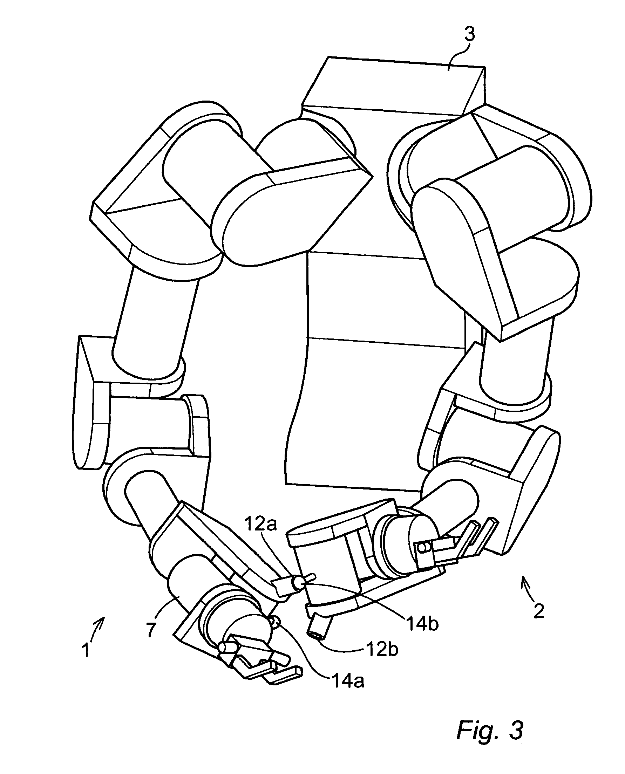

Fig. 3 illustrates an example where the abutment means on the first arm 1 includes one socket 12a and one ball 14a. Correspondingly the abutment means of the second arm 2 has one socket 12b and one ball 14b.

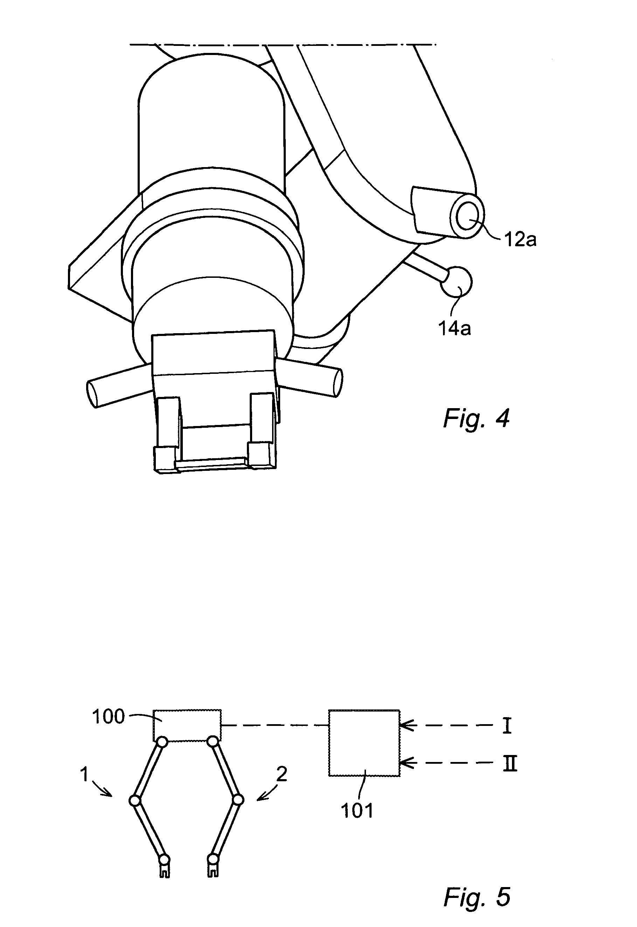

In fig. 4 the socket 12a and the ball 14a of the abutment means of the first arm 1 is illustrated in an enlarged scale.

Fig. 5 illustrates an example of the invention where the operation mode can be selected in an easy way. By providing a signal I or II to the software 101 of the robot 100 the robot is programmed to work according to a precision assembly mode, i.e. the first mentioned mode of operation or according to a collaborative mode, i.e. the second mentioned mode of operation.

The signal can be initiated by a physical button on the robot or its controller, or it can be initiated by a software button or a robot program command. In the precision assembly mode I only the wrist axes of the respective arm are programmed. In the collaborative mode II only one arm, the master arm is programmed and the other arm, the slave arm is arranged to follow the master arm.

## Claims

1. An industrial robot having two arms (1, 2) connected to a common robot base (3) and said arms being arranged to have a tool mounted thereto, **characterized in that** a first of the arms includes a first abutment (11, 12, 15, 16) means, that a second of the arms includes a second abutment (13, 14, 17, 18) means, and that said first abutment means and second abutment means are arranged to abut each other during operation of the arms (1, 2) of the robot, whereby a contact force is established between the two arms via the abutment of the first and second abutment means such that a force may be transferred from one arm to the other arm during operation of the robot.

2. An industrial robot according to claim 1 **characterized in that** each arm (1, 2) includes at least seven axes and a corresponding number of joints, and **in that** the abutment means (11, 12, 13, 14, 15, 16, 17, 18) of each arm (1, 2) are located on joints which joints are located so that in total three joints can move after the abutment means.

3. An industrial robot according to claim 2 **characterized in that** the abutment means (15, 16, 17, 18) includes two oppositely directed abutment surfaces (15, 16, 17, 18).

4. An industrial robot according to claim 3 **characterized in that** each abutment surface (15, 16, 17, 18) is planar.

5. An industrial robot according to claim 2 **characterized in that** each of the first (11, 12) and second (13, 14) abutment means includes a non-planar surface (12, 14), which two non-planar surfaces (12, 14) match each other in a male/female-relationship.

6. An industrial robot according to claim 5 **characterized in that** the non-planar surfaces (12, 14) are spherical surfaces.

7. An industrial robot according to any of claims 1 - 6 **characterized in that** the abutment means (11, 12, 13, 14) of at least one of the arms is arranged on a projecting part (11, 13), projecting from the arm.

8. An industrial robot according to any of claims 1 - 7 **characterized in that** the robot is arranged to operate in either of two modes (I-II), namely a collaborative mode (II), in which the two arms (1, 2) jointly operate on one work-piece, and a precision assembly mode (I), in which the two arms (1, 2) operate on separate work-pieces that are to be assembled.

9. An industrial robot according to claim 8 **characterized in that** the robot includes soft-ware (101) arranged to select one of said modes (I-II) in response to a command and which soft-ware includes operation instructions depending on which mode that has been selected.

10. An industrial robot according to claim 9 **characterized in that** the soft-ware (101) in the collaborative mode (II) includes instruction to one of the arms (1, 2) to abut the other arm (2,1), instruction to define one of the arms (1, 2) to be a master arm and the other arm (2, 1) to be a slave arm, instruction to the master arm to perform a certain operation and instruction to the slave arm to follow the master arm.

11. An industrial robot according to claim 9 or 10 **characterized in that** the soft-ware in the precision assembly mode (I) includes a first set of instructions for the third arm section of one of the arms (1, 2) and a second set of instructions for the third arm section of the other (2, 1) arm.

12. A method for operating an industrial robot according to any of the preceding claims claims , **characterized in that** the arms are brought into physical contact with each other by means of abutting respective abutment means provided on each arm, whereby a contact force is established between the arms via said abutment means, and **in that** the robot is operated with the two arms in contact with each other whereby a force is transferred from one arm to the other arm during operation of the arms of the robot.

13. A method according to claim 12 **characterized in that** the robot is arranged to work in either of two modes, namely a collaborative in which the two arms jointly operate on one work-piece, and an assembly mode, in which the two arms operate on separate work-pieces, and **in that** the mode is selected before the robot starts to operate.

## Patentansprüche

1. Industrieroboter mit zwei Armen (1, 2), die mit einer gemeinsamen Roboterbasis (3) verbunden sind, und wobei die Arme zum Aufweisen eines daran angebrachten Werkzeugs angeordnet sind, **dadurch gekennzeichnet, dass** ein erster der Arme ein erstes Angrenzmittel (11, 12, 15, 16) enthält, dass ein zweiter der Arme ein zweites Angrenzmittel (13, 14, 17, 18) enthält, und dass das erste Angrenzmittel und das zweite Angrenzmittel zum Angrenzen aneinander während des Betriebs der Arme (1, 2) des Roboters angeordnet sind, wodurch eine Kontaktkraft über das Angrenzen des ersten und zweiten Angrenzmittels zwischen den zwei Armen erzeugt ist, sodass eine Kraft während des Betriebs des Roboters von einem auf den anderen Arm übertragen werden kann.

2. Industrieroboter nach Anspruch 1, **dadurch gekennzeichnet, dass** jeder Arm (1, 2) mindestens sieben Achsen und eine entsprechende Anzahl Gelenke enthält, und dass sich die Angrenzmittel (11, 12, 13, 14, 15, 16, 17, 18) jedes Arms (1, 2) an Gelenken befinden, wobei die Gelenke derart angeordnet sind, dass sich insgesamt drei Gelenke nach den Angrenzmitteln bewegen können.

3. Industrieroboter nach Anspruch 2, **dadurch gekennzeichnet, dass** das Angrenzmittel (15, 16, 17, 18) zwei entgegengesetzt gerichtete Angrenzflächen (15, 16, 17, 18) enthält.

4. Industrieroboter nach Anspruch 3, **dadurch gekennzeichnet, dass** jede Angrenzfläche (15, 16, 17, 18) plan ist.

5. Industrieroboter nach Anspruch 2, **dadurch gekennzeichnet, dass** jedes der ersten (11, 12) und zweiten (13, 14) Angrenzmittel eine nichtplane Fläche (12, 14) enthält, wobei die zwei nichtplanen Flächen (12, 14) einander in männlich-/weiblicher Beziehung entsprechen.

6. Industrieroboter nach Anspruch 5, **dadurch gekennzeichnet, dass** die nichtplanen Flächen (12, 14) kugelförmige Flächen sind.

7. Industrieroboter nach einem der Ansprüche 1 bis 6, **dadurch gekennzeichnet, dass** das Angrenzmittel (11, 12, 13, 14) von mindestens einem der Arme an einem vorstehenden Teil (11, 13) angeordnet ist, das von dem Arm vorsteht.

8. Industrieroboter nach einem der Ansprüche 1 bis 7, **dadurch gekennzeichnet, dass** der Roboter zum Arbeiten in einem von zwei Modi (I - II) angeordnet ist, nämlich in einem Kollaborationsmodus (II), in dem die zwei Arme (1, 2) gemeinsam an einem Werkstück arbeiten, und einem Präzisionsmontagemodus (I), in dem die zwei Arme (1, 2) an separaten Werkstücken arbeiten, die montiert werden sollen.

9. Industrieroboter nach Anspruch 8, **dadurch gekennzeichnet, dass** der Roboter Software (101) enthält, die zum Auswählen von einem der Modi (I - II) als Reaktion auf einen Befehl angeordnet ist, und wobei die Software Betriebsanweisungen enthält, die von dem Modus abhängen, der ausgewählt wurde.

10. Industrieroboter nach Anspruch 9, **dadurch gekennzeichnet, dass** die Software (101) im Kollaborationsmodus (II) eine Anweisung an einen der Arme (1, 2) zum Angrenzen an den anderen Arm (2, 1), eine Anweisung zum Definieren von einem der Arme (1, 2) als Master-Arm und des anderen Arms (2, 1) als Slave-Arm, eine Anweisung an den Master-Arm zum Durchführen eines bestimmten Vorgangs und eine Anweisung an den Slave-Arm zum Folgen des Master-Arms enthält.

11. Industrieroboter nach einem der Ansprüche 9 oder 10, **dadurch gekennzeichnet, dass** die Software im Präzisionsmontagemodus (I) einen ersten Satz Anweisungen für den dritten Armteilabschnitt von einem der Arme (1, 2) und einen Satz Anweisungen für den dritten Armteilabschnitt des anderen Arms (2, 1) enthält.

12. Verfahren zum Betreiben eines Industrieroboters nach einem der vorhergehenden Ansprüche, **dadurch gekennzeichnet, dass** die Arme mittels Angrenzen jeweiliger Angrenzmittel, die an jedem Arm vorgesehen sind, in physischen Kontakt miteinander gebracht werden, wodurch eine Kontaktkraft über die Angrenzmittel zwischen den Armen erzeugt wird, und dass der Roboter mit den zwei Armen in Kontakt miteinander betrieben wird, wodurch eine Kraft während des Betriebs der Arme des Roboters von einem Arm auf den anderen Arm übertragen wird.

13. Verfahren nach Anspruch 12, **dadurch gekennzeichnet, dass** der Roboter zum Arbeiten in einem von zwei Modi angeordnet ist, nämlich in einem Kollaborationsmodus, in dem die zwei Arme gemeinsam an einem Werkstück arbeiten, und einem Präzisionsmontagemodus, in dem die zwei Arme an separaten Werkstücken arbeiten, und dass der Modus ausgewählt wird, bevor der Roboter zu arbeiten beginnt.

## Revendications

1. Robot industriel doté de deux bras (1, 2) reliés à une base de robot commune (3), lesdits bras étant conçus pour être munis d'un outil, **caractérisé en ce qu'**un premier des bras comporte un premier moyen de butée (11, 12, 15, 16), **en ce qu'**un deuxième des bras comporte un deuxième moyen de butée (13, 14, 17, 18), et **en ce que** lesdits premier moyen de butée et deuxième moyen de butée sont conçus pour venir en butée l'un contre l'autre durant l'actionnement des bras (1, 2) du robot, de manière à ce que la butée des premier et deuxième moyens de butée établisse une force de contact entre les deux bras de sorte à permettre le transfert d'une force d'un bras à l'autre bras au cours de l'actionnement du robot.

2. Robot industriel selon la revendication 1, **caractérisé en ce que** chaque bras (1, 2) comporte au moins sept axes et un nombre correspondant d'articulations, et **en ce que** les moyens de butée (11, 12, 13, 14, 15, 16, 17, 18) de chaque bras (1, 2) sont situés sur des joints, lesquels joints sont situés de façon à permettre le mouvement au total de trois articulations après les moyens de butée.

3. Robot industriel selon la revendication 2, **caractérisé en ce que** les moyens de butée (15, 16, 17, 18) comportent deux surfaces de butée opposées (15, 16, 17, 18).

4. Robot industriel selon la revendication 3, **caractérisé en ce que** chaque surface de butée (15, 16, 17, 18) est plane.

5. Robot industriel selon la revendication 2, **caractérisé en ce que** chacun des premier (11, 12) et deuxième (13, 14) moyens de butée comporte une surface non plane (12, 14), les deux surfaces non planes (12, 14) se correspondant selon une relation mâle/femelle.

6. Robot industriel selon la revendication 5, **caractérisé en ce que** les surfaces non planes (12, 14) sont des surfaces sphériques.

7. Robot industriel selon l'une quelconque des revendications 1 à 6, **caractérisé en ce que** le moyen de butée (11, 12, 13, 14) d'au moins un des bras est agencé sur une partie saillante (11, 13) qui fait saillie du bras.

8. Robot industriel selon l'une quelconque des revendications 1 à 7, **caractérisé en ce qu'**il est conçu pour fonctionner dans l'un de deux modes (I-II), à savoir un mode de collaboration (II) dans lequel les deux bras (1, 2) agissent conjointement sur une seule pièce, et un mode d'assemblage de précision (I) dans lequel les deux bras (1, 2) agissent sur des pièces distinctes destinées à être assemblées.

9. Robot industriel selon la revendication 8, **caractérisé en ce qu'**il comporte un logiciel (101) conçu pour sélectionner un desdits modes (I-II) en réponse à une commande, le logiciel comportant des instructions d'actionnement qui sont fonction du mode qui a été sélectionné.

10. Robot industriel selon la revendication 9, **caractérisé en ce que** le logiciel (101) dans le mode de collaboration (II) comporte une instruction amenant un des bras (2, 1) à venir en butée contre l'autre bras (1, 2), une instruction désignant l'un des bras (1, 2) comme un bras maître et l'autre bras (2, 1) comme un bras esclave, une instruction amenant le bras maître à exécuter une certaine opération et une instruction amenant le bras esclave à suivre le bras maître.

11. Robot industriel selon la revendication 9 ou 10, **caractérisé en ce que** le logiciel dans le mode d'assemblage de précision (I) comporte un premier jeu d'instructions pour le troisième segment de bras d'un des bras (1, 2) et un deuxième jeu d'instructions pour le troisième segment de bras de l'autre bras (2, 1).

12. Procédé pour faire fonctionner un robot industriel selon l'une quelconque des revendications précédentes, **caractérisé en ce que** les bras sont amenés au contact physique l'un de l'autre par mise en butée de moyens de butée respectifs dotant chaque bras, de manière à ce que lesdits moyens de butée établissent une force de contact entre les bras, et **en ce que** le robot est actionné avec les deux bras au contact l'un de l'autre de sorte à permettre le transfert d'une force d'un bras à l'autre bras au cours de l'actionnement des bras du robot.

13. Procédé selon la revendication 12, **caractérisé en ce que** le robot est conçu pour fonctionner dans l'un de deux modes, à savoir un mode de collaboration dans lequel les deux bras agissent conjointement sur une seule pièce, et un mode d'assemblage dans lequel les deux bras agissent sur des pièces distinctes, et **en ce que** le mode est sélectionné avant la mise en marche du robot.
